# EUROPÄISCHE PATENTSCHRIFT

(11) **EP 2 322 040 B1**
(45) Veröffentlichungstag und Bekanntmachung des Hinweises auf die Patenterteilung: **27.05.2015**
(21) Anmeldenummer: 10190635.2
(22) Anmeldetag: 10.11.2010
(51) Int. Cl.: A22C 15/00

(54) **Aufhängevorrichtung für Würstchenketten**
Suspension device for sausage chains
Dispositif de suspension pour chaînes de petites saucisses

(30) Priorität: 11.11.2009 DE 202009015265 U
(43) Veröffentlichungstag der Anmeldung: 18.05.2011
(73) Patentinhaber: VEMAG Maschinenbau GmbH, 27283 Verden/Aller (DE)
(72) Erfinder: Knodel, Peter, 28876, Oyten (DE)
(74) Vertreter: Eisenführ Speiser

(56) Entgegenhaltungen:
- DE-A1- 2 001 932
- DE-T2- 69 917 428
- US-A- 3 204 844
- US-A1- 2004 084 283
- US-B1- 6 523 462
- US-B1- 7 000 816

## Beschreibung

Die Erfindung betrifft eine Aufhängevorrichtung nach dem Oberbegriff des Anspruchs 1.

Würstchen werden üblicherweise mit bekannten Wurstfüllmaschinen in Form langer portionierter Wurstketten hergestellt. Zwei benachbarte Wursthüllen sind dabei jeweils durch eine Abdrehstelle voneinander geteilt. Die gefüllten und abgeteilten Wursthüllen werden in Schlaufen gelegt und an eine im Stand der Technik bekannte Aufhängevorrichtung gehängt. Durch die Schlaufen der in der Aufhängevorrichtung hängenden Würste wird ein Rauchspieß oder Rauchstock hindurch geschoben. Die Würstchenkette wird dann in dieser Form auf einen Rauchwagen gehängt, der anschließend in eine Räucherkammer gefahren wird.

Treten im Arbeitsablaufs der Aufhängemaschine Fehler beispielsweise aufgrund sogenannter Darmplatzer (schadhafte Wursthülle oder Beschädigung der Wursthülle), aufgrund unterschiedlich langer Wursthüllen oder dgl. Störungen auf, muss der normale Ablaufprozess unterbrochen werden und die fehlerhaften Würste müssen ausgestreift werden. Die Wursthülle wird verknotet und danach können die Würste wieder ordnungsgemäß weiterverarbeitet werden.

Bekannte Füllmaschinen und Vorsatzgeräte weisen eine Füllhöhe von etwa 1000mm bis 1200mm auf. Die Aufhängevorrichtungen sind in ihrer Höhe in der Regel der Füllhöhe der Füllmaschinen und Vorsatzgeräte angepasst, was für den Bediener der Aufhängevorrichtung in vielen Fällen eine sehr niedrige Arbeitshöhe darstellt.

Ein Hochstellen der Füllmaschine und eines entsprechenden Vorsatzgeräts und somit der Aufhängevorrichtung ist wenig sinnvoll, da das Bedienungsproblem dadurch lediglich verlagert wird.

Auch die Verwendung von Zwischenbändern, um die Arbeitshöhe auszugleichen, ist nachteilig, da die Zwischenbänder zusätzlichen Aufwand bedeuten, im Hinblick auf Bedienung, Wartung, Ersatzteilhaltung und Energiebedarf.

Aus der DE 20 01 932 A1 oder der US 7,000,816 B1 sind Vorrichtungen zum Aufgeben von Stranggut, wie zum Beispiel Wurststrängen, auf Haken bekannt, die entlang einer Bewegungsbahn bewegt werden. Die Vorrichtungen weisen zu dem eine Einrichtung zum Ändern der Höhe der Haken auf, mittels der die Haken aus ihrer normalen Hängelage heraus verschwenkt werden, um das Aufgeben des Stranggutes auf die Haken zu vereinfachen.

In der US 3,204,844 A ist eine Vorrichtung zum Aufhängen von Würstchenketten in Schlaufen über entlang einer Bewegungsbahn antreibaren Haken offenbart, die in einer Führungsbahn beweglich aufgenommen sind. Die Vorrichtung umfasst eine Einrichtung zum Ändern der Höhe der Haken in Form einer sich in der Höhe verändernden Führungsbahn, entlang der die Haken bewegt werden. Mit Hilfe der in der Führungsbahn geführten, höhenveränderlichen Haken können verschiedene Nachbearbeitungsschritte der über die Haken gelegten Würstchenkette erfolgen.

DE 6 99 17 428 T2 oder US 2004/084283 A1 offenbaren Vorrichtungen zum Aufhängen von Würstchenketten in Schlaufen, die Führungs- und Antriebsvorrichtungen für jeweils entlang einer Bewegungsbahn bewegte Haken aufweisen. Dabei umfasst die Führungs- und Antriebvorrichtung ein umlaufendes Antriebselement entlang dem beabstandet zueinander die Haken angeordnet sind. In einem Umlenkbereich der Antriebselemente ist jeweils eine Einrichtung zum Ändern der Hakenhöhe vorgesehen, mit der die Haken aus ihrer normalen Hängelage in eine etwa waagerechte Position heraus verschwenkt werden, um das Übergeben und die gleichzeitige Bildung von Schlaufen, des ankommenden Wurststrangs zu erleichtern.

In der US 6,523,462 B1 ist eine Vorrichtung zum Aufhängen von Wurststrängen mit einem umlaufenden Antriebselement und daran angeordneten Förderhaken beschrieben. Im Umlenkbereich des Antriebselements erfolgt wiederum ein Ausrücken der Haken aus ihrer üblichen Hängelage heraus mittels einer Einrichtung zum Ändern der Hakenhöhe. Die Haken sind dazu verschwenkbar am Antriebselement aufgenommen, welche um einen vorbestimmten Winkel quer zur Bewegungsrichtung aus ihrer normalen Hängelage heraus verschwenkt werden.

Die Aufgabe der vorliegenden Erfindung liegt darin, eine Vorrichtung zum Aufhängen von Würstchenketten bereitzustellen, die auf einfache Weise eine Anpassung der Arbeitshöhe an unterschiedlich hohe Füllmaschinen, insbesondere eine Veränderung der Arbeitshöhe der Aufhängevorrichtung für den Bediener ermöglicht und die die oben aufgezählten Nachteile verringert.

Erfindungsgemäß wird diese Aufgabe gemäß Anspruch 1 an einer Vorrichtung zum Aufhängen von Würstchenketten in Schlaufen mit einer Führungs- und Antriebsvorrichtung zum Führen und Antreiben von Haken entlang einer Bewegungsbahn dadurch gelöst, dass die Führungsschiene an wenigstens einem Antriebselement, vorzugsweise an zwei Antriebselementen der Führungs- und Antriebsvorrichtung befestigbar und zusammen mit diesem bewegbar ist, und dass entlang der Führungsschiene jeweils ein Haken verschiebbar ist.

Die erfindungsgemäße, mit einer Einrichtung zum Ändern der Höhe der Haken während der Bewegung ausgestattete Aufhängevorrichtung hat den Vorteil, dass die Arbeitshöhe der Aufhängevorrichtung einfach an die Bedürfnisse eines Bedieners angepasst werden kann. Dies ist beispielsweise vorteilhaft beim Ausstreifen fehlerhafter Würste, beim Umschlingen der frei hängenden Würstchen oder auch bei der Abnahme der Würstchen mit einem Rauchstock (Spieß).

Die Einrichtung zum Ändern der Höhe der Haken weist wenigstens eine Führungsschiene, vorzugsweise mehrere Führungsschienen auf, entlang welcher ein Haken während der Bewegung entlang der Bewegungsbahn zusätzlich in der Höhe, d.h. also vertikal verschiebbar ist. Auf diese Weise können die Haken auf einfache Weise hinsichtlich ihrer Höhenlage verschoben werden.

Die wenigstens eine Führungsschiene ist an wenigstens einem Antriebselement, vorzugsweise an zwei Antriebselementen der Führungs- und Antriebsvorrichtung befestigbar und zusammen mit diesem bewegbar. Dies ermöglicht einen einfachen Aufbau der erfindungsgemäßen Aufhängevorrichtung.

Bei einer bevorzugten Ausführungsform ist die wenigstens eine Führungsschiene im Wesentlichen vertikal und senkrecht zur Bewegungsbahn der Haken ausgerichtet. Somit werden die Haken vertikal verschoben, ohne dass sich ihr Abstand zueinander für die weitere Verarbeitung ändert.

Vorteilhafterweise weist die Führungsschiene zwei Fixierungselemente auf, die die Führungsschiene an den Antriebselementen befestigen. Somit kann die Führungsschiene einfach an den Antriebselementen, insbesondere in Form von Riemen befestigt werden.

Ferner ist es bevorzugt, dass die Führungsschiene einen unteren und einen oberen Gleitabschnitt aufweist, die mit einem oberen bzw. unteren Rand einer Wand der Führungs- und Antriebsvorrichtung so zusammenwirken, dass die Führungsschiene entlang der Bewegungsbahn geführt wird.

Eine besonders bevorzugte Ausführungsform sieht vor, dass die Einrichtung zum Ändern der Höhe der Haken eine Kulissensteuerung aufweist, mittels derer die Haken vertikal verschiebbar sind. Auf diese Weise lassen sich auf einfache Weise eine Vielzahl von verschiedenen Kurven-/Höhenverläufen der Haken einstellen.

Bei einer bevorzugten Ausführungsform weist die Kulissensteuerung einen Schlitz, der entlang einer Wand der Aufhängevorrichtung verläuft, und der Haken eine Befestigungseinheit mit einem Pin auf, wobei der Pin in den Schlitz eingreift. Hierbei ist es besonders vorteilhaft, dass der Verlauf des Schlitzes entlang der Wand der Aufhängevorrichtung wenigstens abschnittsweise eine vordefinierte, insbesondere konstante Steigung aufweist.

Bei einer alternativen Ausführungsform weisen die Kulissensteuerung eine Führungsstange entlang der Bewegungsbahn der Haken und der Haken eine Befestigungseinheit mit einer Führungsrille auf, wobei die Führungsstange in die Führungsrille eingreift. Hierbei ist es besonders vorteilhaft, dass der Verlauf der Führungsstange entlang der Bewegungsbahn der Haken wenigstens abschnittsweise eine konstante Steigung aufweist.

Bei einer alternativen Ausführungsform der Aufhängevorrichtung umfasst die Einrichtung zum Ändern der Höhe der Haken wenigstens eine Führungsbahn, die wenigstens abschnittsweise eine konstante Steigung aufweist, wobei das Antriebselement entlang der Führungsbahn führbar ist.

Hierbei ist es für einen einfachen Aufbau der Einrichtung zum Ändern der Höhe der Haken von Vorteil, dass die Haken an dem Antriebselement, beispielsweise eine Kette, befestigt sind.

Bevorzugte Ausführungsbeispiele der Erfindung werden anhand der beigefügten Zeichnungen beschrieben, in denen zeigen:
- Figur 1:: eine Maschine zur Herstellung von Wurstwaren bestehend aus einer Füllmaschine, einem Vorsatzgerät und einer Aufhängevorrichtung gemäß einer ersten Ausführungsform in Seitenansicht;
- Figur 2:: die Aufhängevorrichtung der Figur 1 in einer Seitenansicht;
- Figur 3:: eine Einrichtung zum Verschieben von Haken gemäß der ersten Ausführungsform mit einem Haken;
- Figur 4:: die Einrichtung zum Verschieben von Haken von Figur 3 mit einer Vielzahl von Haken.
- Figur 5:: eine Kulissenführung eines Hakens;
- Figur 6a:: eine erste Anordnung einer Hakenführung;
- Figur 6b:: eine zweite Anordnung einer Hakenführung;
- Figur 6c:: eine dritte Anordnung einer Hakenführung;
- Figur 7:: eine perspektivische Ansicht einer Aufhängevorrichtung gemäß einer zweiten Ausführungsform;
- Figur 8:: eine Führungsbahn der Aufhängevorrichtung gemäß der zweiten Ausführungsform; und
- Figur 9:: einen vergrößerten Ausschnitt der Einrichtung zum Ändern der Höhe der Haken gemäß der zweiten Ausführungsform.

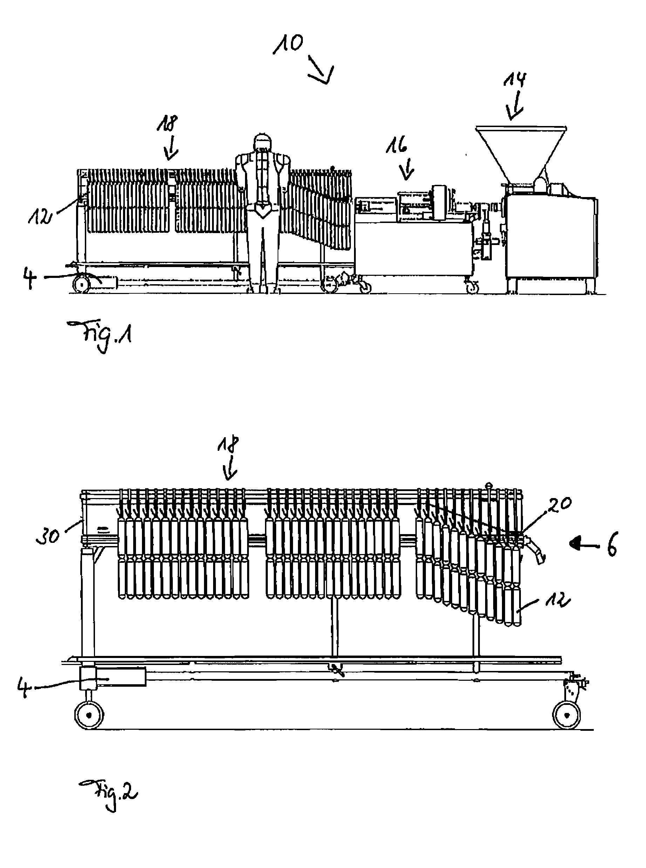

Figur 1 zeigt eine Maschine 10 zur Herstellung und Verarbeitung von Wurstwaren 12 bestehend aus einer Füllmaschine 14, einem Vorsatzgerät 16 und einer Aufhängevorrichtung 18.

Die Wurstmasse wird in bekannter Weise in der Füllmaschine 14 in eine Wursthülle gefüllt und abgeteilt. Anschließend werden die gefüllten und abgeteilten Wursthüllen in der Aufhängevorrichtung 18 an einer Schlaufe frei hängend nebeneinander aufgehängt. Hierfür sind, wie in Figur 2 besser zu erkennen ist, an der Aufhängevorrichtung 18 Haken 20 vorgesehen, an denen die Würste aufgehängt werden können.

Die erfindungsgemäße Aufhängevorrichtung 18 weist eine Führungs- und Antriebsvorrichtung 6 zum Führen und Antreiben von Haken 20 entlang einer Bewegungsbahn auf, welche mindestens ein antreibbares, umlaufendes Antriebselement 28a, 28b zur beabstandeten Aufnahme und zum Antreiben mehrerer Haken 20 aufweist. Die mit dem Antriebselement 28a, 28b verbundenen Haken 20 dienen zum Tragen einer Schlaufe der Würstchenkette 12. Die Antriebselemente der Führungs- und Antriebsvorrichtung 6 sind als zwei voneinander beabstandete Riemen 28a und 28b ausgebildet. Beide Riemen 28a, 28b werden gleichlaufend von einer in Figur 2 dargestellten Welle 30 angetrieben, die von einem Motor 4 mit Getriebe angetrieben wird.

Die Aufhängevorrichtung 18 weist ferner eine Einrichtung 21 zum Ändern der Höhe der Haken 20 während der Bewegung der Haken 20 entlang der Bewegungsbahn, d.h. zum vertikalen Verschieben von Haken 20 im Wesentlichen senkrecht zur Bewegungsbahn der Haken 20, auf, die unten näher erläutert ist. Jeder mittels des Befestigungselements 22 an der Führungsschiene 24 angeordnete Haken 20 ist im Wesentlichen zwischen zwei Gleitabschnitten 26a, 26b entlang der Führungsschiene 24 in vertikaler Richtung verschiebbar.

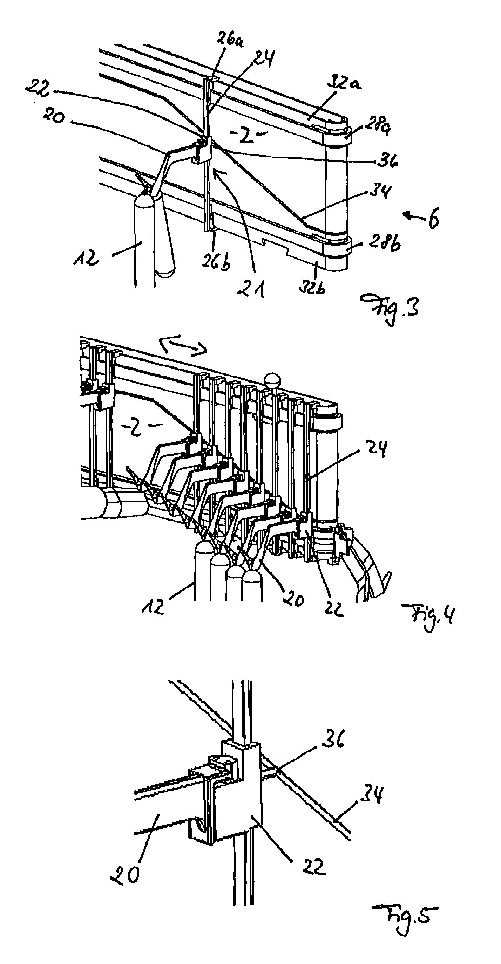

Jeder Haken 20 ist, wie in Figur 3 zu erkennen ist, mittels eines Befestigungselements 22 an einer Führungsschiene 24 bewegbar befestigt und entlang dieser verschiebbar. Die Führungsschiene 24 weist jeweils an ihrem oberen und unteren Ende einen unteren und einen oberen Gleitabschnitt 26a, 26b mit einem hakenförmigen Vorsprung auf. Die Gleitabschnitte 26a, 26b wirken mit einem oberen bzw. unteren Rand 32a, 32b einer Wand 2 der Führungs- und Antriebsvorrichtung 6 so zusammenwirken, dass die Führungsschiene 24 mit Haken 20 entlang der Bewegungsbahn geführt wird.

Benachbart zu den äußeren Rändern der Riemen 28a, 28b befindet sich jeweils der obere bzw. untere Rand 32a, 32b der Wand 2 der Führungs- und Antriebsvorrichtung 6. Der Abstand des oberen bzw. unteren Randes 32a, 32b bzw. die Länge der Führungsschiene 24 ist so gewählt, dass ein unterer und oberer Gleitabschnitt 26a, 26b mit dem oberen bzw. unteren Randes 32a, 32b formschlüssig zusammenwirken, um die Führungsschiene 24 an die Aufhängevorrichtung 18 gleitbar zu befestigen. Die Führungsschiene 24 ist hierbei im Wesentlichen senkrecht zur der in Figur 4 mit dem Doppelpfeil dargestellten Bewegungsrichtung der Riemen 28a und 28b und im wesentlichen vertikal ausgerichtet.

Zur Steuerung der vertikalen Verschiebung der Haken 20 ist eine Kulissensteuerung vorgesehen. Die Kulissensteuerung umfasst einen in einer Wand der Aufhängevorrichtung 18 zwischen den beiden Riemen 28a und 28b ausgebildeten Schlitz 34. In den Schlitz 34 greift, wie am besten in Figur 5 zu erkennen ist, ein Pin 36 des Befestigungselements 22 des Hakens 20 ein. Der Schlitz 34 weist abschnittsweise eine Steigung auf, die konstant ist, aber alternativ abschnittsweise auch unterschiedlich sein kann.

Wenn sich die Riemen 28a, 28b in eine der mit dem in Figur 4 dargestellten Doppelpfeil angegebene Richtung bewegen, werden die Haken 20 entlang des Schlitzes 34 geführt. Gelangen die Haken 20 in den Bereich der Steigung des Schlitzes 34, werden die Haken 20 zusätzlich zur Hauptbewegungsrichtung auch entlang der Führungsschiene 24 vertikal verschoben. Bewegen sich die Riemen 28a, 28b im Uhrzeigersinn, werden die Haken entlang der Führungsschiene 24 aufgrund der Einrichtung zum Verschieben von Haken 20 von unten nach oben verschoben. Bewegen sich die Riemen 28a, 28b in die entgegengesetzte Richtung werden die Haken 20 aufgrund der Einrichtung zum Verschieben von Haken 20 entlang der Führungsschiene 24 von oben nach unten geführt.

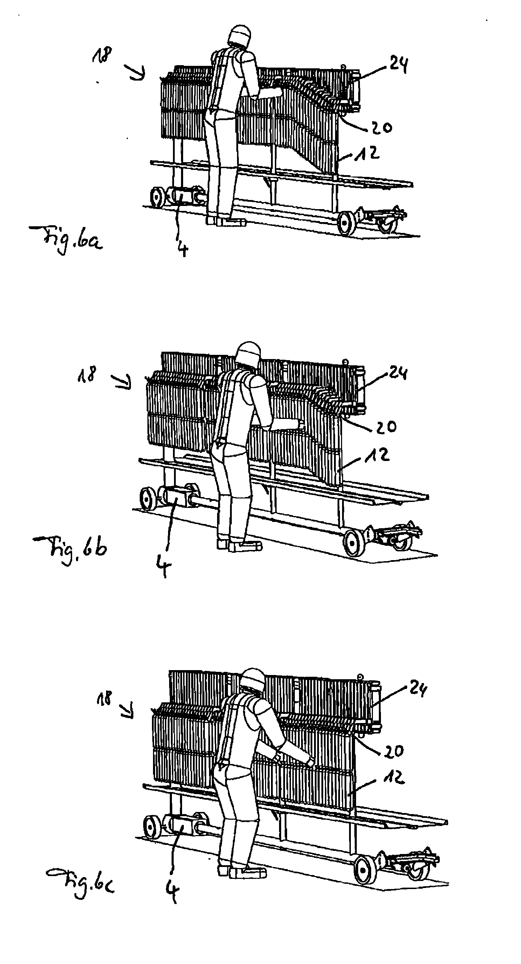

Wie in den Figuren 6a bis 6c zu erkennen ist, kann der Verlauf des Schlitzes 34 entlang der Aufhängevorrichtung 18 und somit die Führungskurve der Haken den vom Bediener gewünschten Bedürfnissen wie beispielsweise Arbeitshöhe angepasst werden.

Statt des Schlitzes in der Wand kann alternativ beispielsweise eine Führungsstange verwendet werden, die entlang der Bewegungsbahn der Haken angeordnet ist und den Höhenverlauf der Haken vorgibt. An einem Haken kann dann eine Nut, Rille oder dergleichen vorgesehen sein, in die die Führungsstange eingreift. Auf diese Weise wird der Haken dann während der Bewegung in der Aufhängevorrichtung entlang der Führungsstange geführt. Weist der Verlauf der Führungsstange eine Steigung auf, können die Haken beim Passieren der Steigung vertikal verschoben werden.

Anstelle der Kulissensteuerung sind selbstverständlich auch andere Steuereinrichtungen im Rahmen der vorliegenden Erfindung vorstellbar.

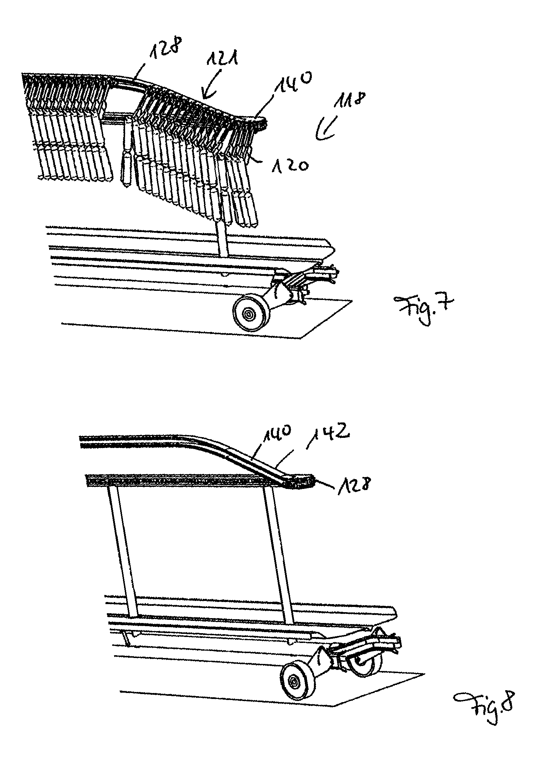

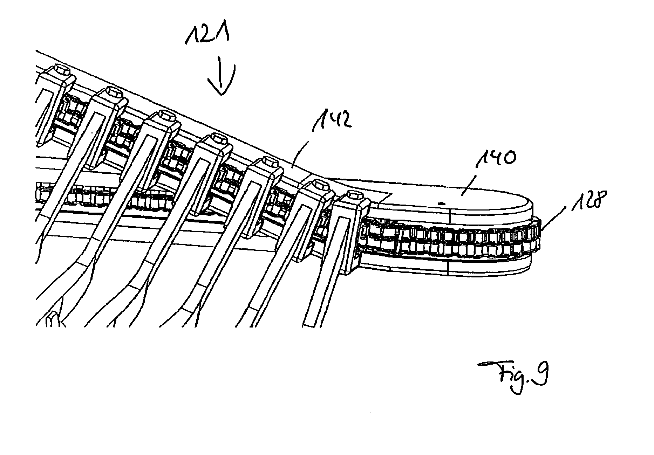

In den Figuren 7 bis 9 ist eine alternative Ausführungsform einer Aufhängevorrichtung 118 dargestellt. Die Einrichtung 121 zum Ändern der Höhe der Haken 120 umfasst eine im Wesentlichen horizontal ausgerichtete, schienenförmig ausgebildete Führungsbahn 140, die einen Abschnitt 142 mit einer zunehmenden Steigung aufweist. Ein als Kette 128 ausgebildetes, umlaufendes Antriebselement wird entlang der Führungsbahn 140 geführt. Die Haken 120 sind im Abstand voneinander an der Kette 128 befestigt.

Wird die Kette 128 entlang der Führungsbahn 140 geführt, werden die an der Kette 128 befestigten Haken 120 in dem Abschnitt 142 mit zunehmender Steigung nach oben verschoben, so dass die Haken auf diese Weise höhenverstellbar sind. Über den Grad und die Länge der Steigung im Abschnitt 142 mit zunehmender Steigung kann das Maß für die Höhenverstellbarkeit der Haken 120 festgelegt werden.

Anstelle einer Führungsbahn 140 sind selbstverständlich auch mehrere Führungsbahnen beispielsweise mit unterschiedlichen Steigungsgraden und Steigungslängen vorstellbar, um unterschiedliche Arbeitshöhen für die Haken an einer Aufhängevorrichtung zu erhalten.

## Patentansprüche

1. Vorrichtung (18) zum Aufhängen von Würstchenketten (12) in Schlaufen mit einer Führungs- und Antriebsvorrichtung (6) zum Führen und Antreiben von Haken (20; 120) entlang einer Bewegungsbahn, welche ein antreibbares, umlaufendes Antriebselement (28a, 28b; 128) zur beabstandeten Aufnahme und zum Antreiben mehrerer Haken (20; 120) aufweist, mit mehreren mit dem Antriebselement (28a, 28b; 128) verbundenen Haken (20; 120) zum Tragen einer Schlaufe der Würstchenkette (12), und mit einer Einrichtung (21, 121) zum Ändern der Höhe der Haken (20; 120) während der Bewegung der Haken (20; 120) entlang der Bewegungsbahn, welche wenigstens eine Führungsschiene (24), vorzugsweise mehrere Führungsschienen (24) aufweist,
**dadurch gekennzeichnet, dass** die Führungsschiene (24) an wenigstens einem Antriebselement (28a, 28b), vorzugsweise an zwei Antriebselementen (28a, 28b) der Führungs- und Antriebsvorrichtung befestigbar und zusammen mit diesem bewegbar ist, und
dass entlang der Führungsschiene (24) jeweils ein Haken (20) verschiebbar ist.

2. Aufhängevorrichtung nach Anspruch 1, **dadurch gekennzeichnet, dass** die wenigstens eine Führungsschiene (24) im Wesentlichen vertikal und senkrecht zur Bewegungsbahn der Haken (20) ausgerichtet ist.

3. Aufhängevorrichtung nach Anspruch 2, **dadurch gekennzeichnet, dass** die Führungsschiene (24) zwei Fixierungselemente aufweist, die die Führungsschiene an den Antriebselementen (28a, 28b) befestigen.

4. Aufhängevorrichtung nach einem der vorhergehenden Ansprüche, **dadurch gekennzeichnet, dass** die Führungsschiene (24) einen unteren und einen oberen Gleitabschnitt (26a, 26b) aufweist, die mit einem oberen bzw. unteren Rand (32a, 32b) einer Wand (2) der Führungs- und Antriebsvorrichtung so zusammenwirken, dass die Führungsschiene (24) entlang der Bewegungsbahn geführt wird.

5. Aufhängevorrichtung nach einem der vorhergehenden Ansprüche, **dadurch gekennzeichnet, dass** die Einrichtung (21) zum Ändern der Höhe der Haken (20) eine Kulissensteuerung aufweist, mittels derer die Haken vertikal verschiebbar sind.

6. Aufhängevorrichtung nach Anspruch 5, **dadurch gekennzeichnet, dass** die Kulissensteuerung einen Schlitz (34), der entlang einer Wand der Aufhängevorrichtung verläuft, und der Haken (20) eine Befestigungseinheit (22) mit einem Pin (36) aufweist, wobei der Pin (36) in den Schlitz (34) eingreift.

7. Aufhängevorrichtung nach Anspruch 6, **dadurch gekennzeichnet, dass** der Verlauf des Schlitzes (34) entlang der Wand der Aufhängevorrichtung (18) wenigstens abschnittsweise eine vordefinierte, insbesondere konstante Steigung aufweist.

8. Aufhängevorrichtung nach Anspruch 6, **dadurch gekennzeichnet, dass** die Kulissensteuerung eine Führungsstange entlang der Bewegungsbahn der Haken und dass der Haken eine Befestigungseinheit mit einer Führungsrille aufweisen, wobei die Führungsstange in die Führungsrille eingreift.

9. Aufhängevorrichtung nach Anspruch 8, **dadurch gekennzeichnet, dass** der Verlauf der Führungsstange entlang der Bewegungsbahn der Haken wenigstens abschnittsweise eine konstante Steigung aufweist.

10. Aufhängevorrichtung nach Anspruch 1, **dadurch gekennzeichnet, dass** die Einrichtung (121) zum Ändern der Höhe der Haken (120) wenigstens eine Führungsbahn (140) umfasst, die wenigstens abschnittsweise eine konstante Steigung aufweist und das Antriebselement (128) entlang der Führungsbahn (140) führbar ist.

11. Aufhängsvorrichtung nach Anspruch 10, **dadurch gekennzeichnet, dass** die Haken (120) an dem Antriebselement (128) befestigt sind.

12. Aufhängsvorrichtung nach Anspruch 10 oder 11, **dadurch gekennzeichnet, dass** das Antriebselement (128) eine umlaufende Kette ist.

## Claims

1. A device (18) for suspending strings of sausages (12) in loops, with a guide and drive device (6) for guiding and driving hooks (20; 120) along a path of movement, which has a drivable circulating drive element (28a, 28b; 128) for spaced receiving and for driving a plurality of hooks (20; 120), with a plurality of hooks (20; 120) which are connected to the drive element (28a, 28b; 128) for carrying a loop of the string of sausages (12), and with a means (21, 121) for altering the height of the hooks (20; 120) during the movement of the hooks (20; 120) along the path of movement, which means has at least one guide rail (24), preferably a plurality of guide rails (24),
**characterised in that** the guide rail (24) can be fastened to at least one drive element (28a, 28b), preferably to two drive elements (28a, 28b), of the guide and drive device and is movable together therewith, and
**in that** one hook (20) is displaceable along the guide rail (24) in each case.

2. A suspension device according to Claim 1, **characterised in that** the at least one guide rail (24) is oriented substantially vertically and perpendicularly to the path of movement of the hooks (20).

3. A suspension device according to Claim 2, **characterised in that** the guide rail (24) has two fixing elements which fasten the guide rail to the drive elements (28a, 28b).

4. A suspension device according to one of the preceding claims, **characterised in that** the guide rail (24) has a lower and an upper sliding portion (26a, 26b) which cooperate with an upper or a lower edge (32a, 32b) respectively of a wall (2) of the guide and drive device in such a way that the guide rail (24) is guided along the path of movement.

5. A suspension device according to one of the preceding claims, **characterised in that** the means (21) for altering the height of the hooks (20) has a sliding link control, by means of which the hooks are vertically displaceable.

6. A suspension device according to Claim 5, **characterised in that** the sliding link control has a slot (34) which extends along a wall of the suspension device, and the hook (20) has a fastening unit (22) with a pin (36), the pin (36) engaging in the slot (34).

7. A suspension device according to Claim 6, **characterised in that** the course of the slot (34) along the wall of the suspension device (18) has at least in portions a predefined and in particular constant gradient.

8. A suspension device according to Claim 6, **characterised in that** the sliding link control has a guide bar along the path of movement of the hooks, and **in that** the hook has a fastening unit with a guide groove, the guide bar engaging in the guide groove.

9. A suspension device according to Claim 8, **characterised in that** the course of the guide bar along the path of movement of the hooks has at least in portions a constant gradient.

10. A suspension device according to Claim 1, **characterised in that** the means (121) for altering the height of the hooks (120) comprises at least one guide path (140) which at least in portions has a constant gradient, and the drive element (128) can be guided along the guide path (140).

11. A suspension device according to Claim 10, **characterised in that** the hooks (120) are fastened to the drive element (128).

12. A suspension device according to Claim 10 or 11, **characterised in that** the drive element (128) is a revolving chain.

## Revendications

1. Dispositif (18) de suspensions de chaînes (12) de petites saucisses dans des anneaux comportant
un dispositif (6) de guidage et d'entraînement servant à guider et entraîner des crochets (20 ; 120) le long d'une piste de déplacement comprenant un élément (28a, 28b ; 128) d'entraînement périphérique, pouvant être entraîné, en vue de la réception espacée et de l'entraînement de plusieurs crochets (20 ; 120) plusieurs crochets (20 ; 120) reliés à l'élément (28a, 28b ; 128) d'entraînement et servant à porter un anneau de la chaîne (12) de petites saucisses,
et un système (21, 121) servant à modifier la hauteur des crochets (20 ; 120) pendant le déplacement des crochets (20 ; 120) le long de la piste de déplacement, lequel comprend au moins un rail (24) de guidage, de préférence plusieurs rails (24) de guidage,
**caractérisé en ce que** le rail (24) de guidage peut être fixé à au moins un élément 28a, 28b) d'entraînement, de préférence à deux éléments (28a, 28b) d'entraînement du dispositif de guidage et d'entraînement et qu'il peut se déplacer avec ledit élément, et
**en ce qu'**un crochet (20) respectivement peut être déplacé le long du rail (24) de guidage.

2. Dispositif de suspension selon la revendication 1, **caractérisé en ce que** l'au moins un rail (24) de guidage est disposé sensiblement verticalement et perpendiculairement à la piste de déplacement des crochets (20).

3. Dispositif de suspension selon la revendication 2, **caractérisé en ce que** le rail (24) de guidage comprend deux éléments de fixation, qui fixent le rail de guidage aux éléments (28a, 28b) d'entraînement.

4. Dispositif de suspension selon l'une quelconque des revendications précédentes, **caractérisé en ce que** le rail (24) de guidage comprend des sections (26a, 26b) de coulissement inférieure et supérieure, qui coopèrent avec un bord supérieur ou un bord inférieur (32a, 32b) d'une paroi (2) du dispositif de guidage et d'entraînement de telle sorte que le rail (24) de guidage soit guidé le long de la piste de déplacement.

5. Dispositif de suspension selon l'une quelconque des revendications précédentes, **caractérisé en ce que** le système (21) servant à modifier la hauteur des crochets (20) comprend une distribution à coulisses, permettant de déplacer les crochets verticalement.

6. Dispositif de suspension selon la revendication 5, **caractérisé en ce que** la distribution à coulisses comprend une fente (34), située le long d'une paroi du dispositif de suspension, et **en ce que** le crochet (20) comprend une unité (22) de fixation avec une broche (36), la broche (36) entrant en prise dans la fente (34).

7. Dispositif de suspension selon la revendication 6, **caractérisé en ce que** le tracé de la fente (34) le long de la paroi du dispositif (18) de suspension présente, au moins partiellement, une inclinaison prédéfinie et, en particulier, constante.

8. Dispositif de suspension selon la revendication 6, **caractérisé en ce que** la distribution à coulisses comprend une tige de guidage le long de la piste de déplacement des crochets, et **en ce que** le crochet comprend une unité de fixation avec une rainure de guidage, la tige de guidage entrant en prise dans la rainure de guidage.

9. Dispositif de suspension selon la revendication 8, **caractérisé en ce que** le parcours de la tige de guidage le long de la piste de déplacement des crochets présente, au moins partiellement, une inclinaison constante.

10. Dispositif de suspension selon la revendication 1, **caractérisé en ce que** le système (121) servant à modifier la hauteur des crochets (120) comprend au moins une piste (140) de guidage, présentant, au moins partiellement, une inclinaison constante, et **en ce que** l'élément (128) d'entraînement peut être guidé le long de la piste (140) de guidage.

11. Dispositif de suspension selon la revendication 10, **caractérisé en ce que** les crochets (120) sont fixés à l'élément d'entraînement (128).

12. Dispositif de suspension selon la revendication 10 ou la revendication 11, **caractérisé en ce que** l'élément (128) d'entraînement est une chaîne qui circule.
